# EUROPÄISCHE PATENTANMELDUNG

(11) **EP 0 673 761 A1**
(43) Veröffentlichungstag der Anmeldung: **27.09.1995**
(21) Anmeldenummer: 95103941.1
(22) Anmeldetag: 17.03.1995
(51) Int. Cl.: B32B 27/30, B32B 5/18, B32B 17/10

(54) **Vollständig recyclierbarer Verbundkörper,insbesondere zur Herstellung von Möbelplatten**

(30) Priorität: 22.03.1994 DE 9404843 U
(71) Anmelder: Degussa Aktiengesellschaft, D-60311 Frankfurt (DE)
(72) Erfinder: Oberländer, Klaus, D-63457 Hanau (DE); Brand, Norbert, Dr., D-64291 Darmstadt (DE); Gütlbauer, Franz, Dr., A-2500 Baden (AT); Molnar, Gerald, A-2440 Gramatneusiedl (AT)

(57) **Zusammenfassung**

Vollständig recyclierbare Verbundkörper, insbesondere für Möbelplatten, mit einem Kern (3) aus wenigstens einem ersten Material, der vor einer Hülle (1,4,5,6, 7) aus wenigstens einem zweiten Material umgeben ist, wobei der Kern (3) spezifisch leichter ist als die Hülle (1,4,5,6,7), kennzeichnen sich dadurch, daß die Hülle (1,4,5,6,7) aus Acrylglas ist und, daß Kern (3) unter den Depolymerisationsbedingungen von Acrylglas inert ist. Bevorzugt ist der Kern ein anorganischer Schaum, beispielsweise ein Glasschaum. Daraus werden Möbelplatten, Türen, Frontpartien, Arbeitsflächen, insbesondere von Küchenmöbeln (Ersatz der MDF-Platte) hergestellt.

## Beschreibung

Die Neuerung betrifft vollständig recyclierbare Verbundkörper, insbesondere für Möbelplatten, mit einem Kern aus wenigstens einem ersten Material, der von einer Hülle aus wenigstens einem zweiten Material umgeben ist, wobei der Kern spezifisch leichter ist als die Hülle.

Nach Verbundkörpern, wie sie Gegenstand der vorliegenden Neuerung sind, besteht insbesondere in der Möbelindustrie ein gesteigerter Bedarf, weil solche Verbundkörper beispielsweise sehr leicht in die Form von Türen, Platten, Frontpartien oder Arbeitsflächen zu bringen sind und daher die einfache Fertigung von Möbeln, vor allem Küchenmöbeln, gestatten.

Standardmäßig wird heute im Küchenbereich die beschichtete MDF-Platte (d.h. mitteldichte Faserplatte) eingesetzt. Die MDF-Platte besteht in der Regel aus Lignozellulosefasern und einem synthetischen Bindemittel und hat den Vorteil, daß sie eine hohe Stabilität mit einer relativ leichten Verarbeitbarkeit verbindet. Wird jedoch z. B. eine Sichtseite mit hochglänzender Oberfläche gewünscht, so muß die MDF-Platte entweder hochglanzlackiert oder mit einem hochglänzenden Furnier beklebt werden. Andere Dekore und Oberflächenstrukturen werden durch Aufbringen von bedruckten und/oder geprägten Folien, meist aus PVC, oder durch hochdrucklaminierte Papiere erzeugt.

Der Kern der MDF-Platte ist dann zwar relativ dauerhaft und die Oberfläche kann auch kratzfest vergütet sein, die hierzu benötigten Materialien erschweren jedoch das Recycling der Verbundkörper erheblich, ja machen es ohne vorherige Trennung der Bestandteile annähernd unmöglich. Die sortenreine Trennung wiederum ist, wenn überhaupt möglich, mit zu hohen Kosten verbunden und daher nicht praktikabel.

Ein Werkstoff, der bekanntermaßen sowohl Oberflächen von höchstem Glanz als auch eine hundertprozentige Recyclierbarkeit miteinander verbindet ist gegossenes oder extrudiertes Acrylglas. Es hat nun schon Versuche gegeben, sich bei der Schaffung von Möbelfronten, die dem Anforderungsprofil : "Hochglanzoberfläche und vollständige Recyclierbarkeit" genügen, dieses Werkstoffs zu bedienen, die Akzeptanz am Markt war bislang allerdings eher gering. Massives Acrylglas kann zwar sowohl die Forderungen nach Gefälligkeit und Hochglanzoberfläche als auch nach vollständiger Wiederverwertbarkeit ohne den gefürchteten Effekt des "Downcyclings" befriedigen, ist jedoch in massiver Ausführung sehr schwer und teuer und damit bislang nur für Musterstücke, nicht aber für eine Massenproduktion von Teilen für die Möbelindustrie, insbesondere Möbelfronten, geeignet.

Aufgabe der Neuerung ist es daher, einen Verbundkörper der eingangs erwähnten Gattung anzugeben, der einfach und preisgünstig gefertigt werden kann, der u. a. eine hohen Oberflächenglanz haben kann, hundertprozentig recyclierbar ist und gleichzeitig eine deutliche Reduzierung des Gewichts gegenüber massivem Acrylglas ohne wesentlichen Stabilitätsverlust ermöglicht.

Gelöst werden diese und weitere nicht näher genannte Aufgaben durch einen Verbundkörper mit den Merkmalen des kennzeichnenden Teils des Anspruchs 1 oder dem Gegenstand des nebengeordneten Anspruchs.

Vorteilhafte und bevorzugte Ausführungsformen werden in den davon abhängigen Ansprüchen unter Schutz gestellt.

Insbesondere dadurch, daß der neuerungsgemäße Verbundkörper eine Hülle aus Acrylglas aufweist und daß der Kern unter den Depolymerisationsbedingungen von Acrylglas chemisch inert ist gelingt es, die Nachteile von massivem Acrylglas zu überwinden und gleichzeitig die hundertprozentige Recyclierbarkeit des Verbundkörpers zu gewährleisten, und zwar ohne vorherige aufwendige Trenn- oder Reinigungsoperationen vor dem Recycling.

Im Rahmen der Neuerung ist es grundsätzlich wichtig, daß der Kern zur Gewichtsersparnis des Verbundkörpers beiträgt, während die Hülle aus Acrylglas den hohen Glanz oder ein beliebiges Dekor zum gefälligen Erscheinungsbild des Verbundkörpers liefern kann. Ein Verbundkörper im neuerungsgemäßen Sinne kann dabei jede beliebige Form aufweisen, sofern gewährleistet ist, daß der Kern allseitig und im wesentlichen vollständig von der Hülle ummantelt ist. Bei bestimmten Anwendungsfällen jedoch kann es im Rahmen der Neuerung durchaus vorteilhaft sein, wenn der Kern nur teilweise, aber immer noch zum größten Teil von der Hülle umgeben ist. So ist vorstellbar, daß bei Verwendung des Verbundkörpers als Küchencorpus, z. B. nur die Sichtseiten vom Acrylglasmantel eingehüllt sind, an Stoßstellen jedoch beispielsweise Kanten, die nicht sichtbar sind, unbedeckt bleiben. Neuerungsgemäß kann die Hülle dabei auch als Mantel bezeichnet werden und der Kern als Füllung. Der Begriff Verbundkörper beinhaltet neuerungsgemäß nicht, daß zwischen Kern und Hülle eine Verbindung aufgrund chemischer Wechselwirkungen zwischen Kern- und Hüllenmaterial(ien) bestehen muß. Diese chemische Verbindung oder Verklebung oder Verzahnung kann bestehen in einer Schnittansicht. Bevorzugt ist ein Zusammenhalt des Verbundkörpers durch physikalische Kräfte. So bildet vorteilig der Kern ein leichtes stabiles Gerüst, das von Acrylglas zumindest überwiegend umgeben oder eingehüllt ist. Es kann jedoch auch genausogut zu einer, beispielsweise durch den Herstellungsprozeß bedingten, Verzahnung und/oder chemischen Wechselwirkung kommen. Außerdem können auch Substanzen als Bindungsvermittler zwischen Kern und Hülle eingebracht sein. Ebenso sind Misch-Wechselwirkungen möglich. Gemäß der Neuerung wird des weiteren unter Verzahnung verstanden, daß das Hüllenmaterial in das Kernmaterial, insbesondere aufgrund dessen dreidimensionaler Struktur, eingreift, beispielsweise durch Ausfüllung von Poren des Kernmaterials.

Im Rahmen der Neuerung ist es weiterhin wichtig, daß der Kern unter den Depolymerisationsbedingungen des Hüllenmaterials chemisch inert ist. Hierbei wird unter "chemischer Inertheit" im neuerungsgemäßen Sinne verstanden, daß der Kern oder die Füllung beim Depolymerisieren des Hüllen- oder Mantelmaterials keine Substanzen bildet oder freisetzt, die eine Wiedergewinnung des Monomeren oder der Monomeren, die das Acrylglas aufbauen, unter den Bedingungen der Depolymerisation deutlich erschweren oder gar unmöglich machen. Unter diesen Voraussetzungen kann bei der Wiederaufarbeitung von gebrauchten Verbundkörpern ein Trennen von Kern und Hülle entfallen, weil der Kern beim Recycling des die Hülle ausbildenden Acrylglases nicht stört. Nach entsprechendem Vorbereiten von Altplatten oder -fronten, beispielsweise durch Shreddern und/oder Zerkleinern in geeigneten Mühlen und dergleichen oder ggfls. auch gänzlich unzerkleinert, können die neuerungsgemäßen Verbundkörper standardmäßigen, bekannten Recyclingverfahren durch Depolymerisation für Acrylglas unterworfen werden. Hierbei depolymerisiert das Acrylglas zum Monomeren und wird durch Extraktion, Destillation und/oder Rektfikation ohne jeglichen Qualitätsverlust wiedergewonnen, während das unter den bei der Depolymerisation herrschenden Druck-, Temperatur- und sonstigen Reaktionbedingungen chemisch inerte Kernmaterial die Depolymerisation des Acrylglases nicht stört, im wesentlichen chemisch nicht angegriffen wird und sich als Schlacke im Sumpf der Acrylglasdepolymerisationsanlage wiederfinden kann.

Von hier ist das Material, das die Füllung des Verbundkörpers ausmachte, dann beispielsweise wieder als Sand verwendbar oder kann einer Deponie zugeführt werden. Das recycelte Material stellt insbesondere in keinster Weise eine Belastung für die Umwelt dar.

Der Kern muß, wie bereits ausgeführt im wesentlichen zwei Eigenschaften aufweisen. Zum einen darf er die Depolymerisation des Acrylglases der Hülle nicht stören, zum anderen muß er im Verhältnis zum Acrylglas spezifisch leichter sein.

Hierbei ist im Sinne der Neuerung unter spezifisch leichter zu verstehen, daß das Verhältnis der Masse des gesamten vom Kern beanspruchten Raumes zum Volumen des Kerns geringer ist, als die Dichte der Hülle. Darüber hinaus ist es jedoch nicht von Belang, ob das Volumen des Kerns statistisch von Kernmasse erfüllt ist oder ob es eine bestimmte Verteilung der Massen im Kern gibt, allerdings mit der einen Einschränkung, daß eine ausreichende Stabilität des Kerns und damit des gesamten Verbundkörpers gewährleistet ist. Diese Randbedingungen sind jedoch vom Fachmann mit wenigen Versuchen optimierbar und insbesondere wird es der Fachmann verstehen, unter Berücksichtigung der Preise für die Materialien von Kern und Hülle in Abhängigkeit von der erwünschten Gewichtsersparnis im Vergleich zum massiven Acrylglas die Dicke der Hülle so zu wählen, daß in Abhängigkeit von der Stabilität des Kerns auch die Hülle ggfls. noch zur Stabilität des Verbundkörpers in nicht unerheblichem Maße beiträgt. Weitere Einschränkungen für das Kernmaterial bestehen im wesentlichen nicht.

Der Kern kann weiterhin aus einem einzigen oder auch selbst aus einer Mehrzahl von Materialien bestehen. Die Materialkombinationen selbst unterliegen keinen anderen Einschränkungen, als denjenigen, die oben schon für den Kern aufgeführt sind. Als Kernmaterial kommen daher alle als "Abstandhalter" zwischen den Hüllenseiten geeignete Materialien in Frage, bevorzugt sind jedoch solche Materialien, die selbst porig sind, beispielsweise geschäumte Materialien. Die im neuerungsgemäßen Verbundkörper als Kern einsetzbaren Materialien umfassen grundsätzlich alle denkbaren Schäume, die die oben genannten Randbedingungen erfüllen. Also auch organische Schäume, sofern sie die Wiederaufarbeitung des Acrylglases nicht stören. Besonders bevorzugt und bei weitem am vorteilhaftesten sind jedoch anorganische Schäume, insbesondere Glasschäume. Diese sind weiterhin bevorzugt geschlossenzellig und bestehen aus den allgemein bekannten anorganischen Verbindungen, die am Aufbau von Gläsern beteiligt sein können. Bevorzugt sind reine Glasschäume ohne jegliche Bindemittelzusätze.

Vorteilig soll die Füllung, respektive der Kern, nach Möglichkeit eine weitere Reihe von Eigenschaften aufweisen. So ist es von Vorteil, wenn die Dichte des Kerns in Bereichen zwischen 50 kg/m³ und 500 kg/m³ liegt, bevorzugt zwischen 100 und 200 kg/m³ und ganz besonders vorteilhaft wird Kernmaterial mit einer Dichte von ca. 130 kg/m³ verwendet.

Die Druckfestigkeit des Schaumes ist unter Berücksichtigung der Dicke und Stabilität des Mantels so zu wählen, daß unter im Haushalt üblichen Belastungen keine Deformation des Mantels entsteht. Druckfestigkeiten von 0,6 bis 0,9 N/mm³ sind ausreichend.

Die Porösität des Schaumes kann in weiten Bereichen variiert werden. Es ist jedoch vorteilhaft bei der Herstellung eines Verbundkörpers nach Beispiel 3, eine geschlossen-zelligen Schaum zu verwenden, damit nicht das flüssige Monomere den Schaum durchtränkt. Ein mit Erfolg eingesetzter handelsüblicher Glasschaum hat geschlossene Zellen und ist wasser- und wasserdampfundurchlässig. Der Zelldurchmesser liegt zwischen 0,2 und 1,5 mm, größtenteils bei 0,8 mm.

Im folgenden wird die Neuerung durch Ausführungsbeispiele, in denen auf die beigefügten Figuren 1 - 3 Bezug genommen wird, weitergehend erläutert.

In den Figuren zeigen
- Figur 1:: einen Querschnitt durch eine erste Ausführungsform eines neuerungsgemäßen Verbundkörpers;
- Figur 2:: einen Querschnitt durch eine weitere Ausführungsform eines neuerungsgemäßen Verbundkörpers; und
- Figur 3:: einen Querschnitt durch noch eine weitere Ausführungsform eines neuerungsgemäßen Verbundkörpers.

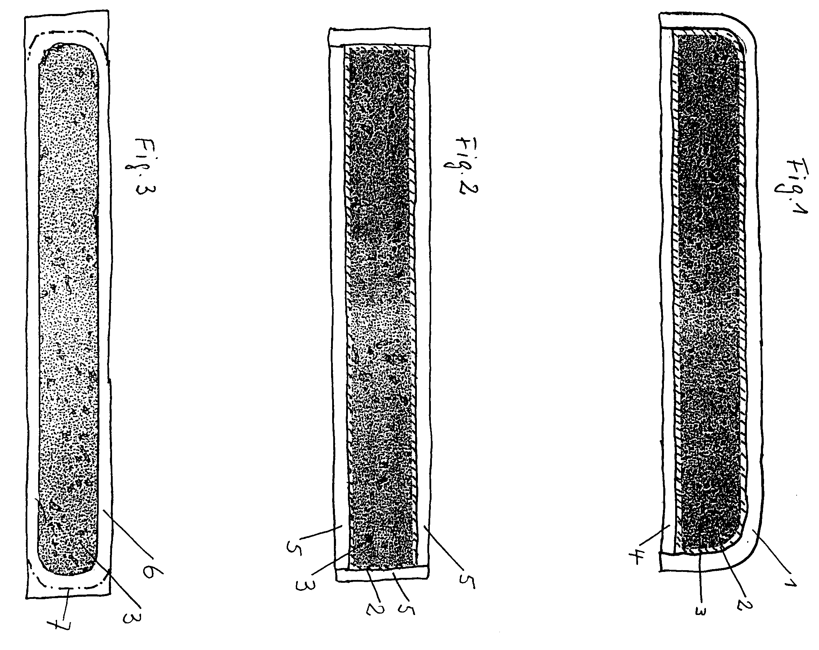

Beispiel 1 nimmt Bezug auf Fig. 1 und zeigt einen Schnitt durch einen Verbundkörper gemäß der Neuerung.

Eine tiefgezogene oder spritzgegossene Schale 1 wird mit Glasschaum 3 hinterfüttert und mit einer Platte 4 abgedeckt. Schale und Platte werden mit dem Glasschaum durch Klebstoff 2, vorzugsweise Acrylatklebstoff, der besonders vorteilhaft die Depolymerisation nicht stört, verbunden. Schale und Platte können aus gegossenem oder extrudiertem Acrylglas bestehen.

Beispiel 2 nimmt Bezug auf Fig. 2 und zeigt einen Schnitt durch einen weiteren neuerungsgemäßen Verbundkörper.

Der Glasschaum 3 wird mit planen Platten 5 mit Hilfe eines Klebstoffes 2 beplankt. Dies kann auch in einem kontinuierlichen Laminierverfahren für oben und unten geschehen. Die Kanten können anschließend kaschiert werden.

Beispiel 3 nimmt Bezug auf Fig. 3 und zeigt einen Schnitt durch einen neuerungsgemäßen Verbundkörper.

Gegossenes Acrylglas wird hergestellt, in dem man monomeres flüssiges Methylmethacrylat in eine aus zwei planen Glasscheiben gebildete Form einfüllt und darin polymerisiert. Den in Fig. 3 gezeigten Verbundkörper erhält man, in dem man den Glasschaum 3 vor dem Befüllen der Form in diese einlegt und zu den Scheiben distanziert. Danach wird wie üblich befüllt und polymerisiert. An der Grenzfläche zwischen Acrylglas 6 und Glasschaum bildet sich in den angeschnittenen Schaumbläschen eine innige Verzahnung aus. Nach dem Entformen kann der Verbundkörper z. B. so bearbeitet werden, daß runde Kanten 7 entstehen.

Weitere Modifikationen und Ausführungsformen des neuerungsgemäßen Verbundkörpers werden aus den sich anschließenden Schutzansprüchen ersichtlich.

## Patentansprüche

1. Vollständig recyclierbarer Verbundkörper, insbesondere für Möbelplatten, mit einem Kern (3) aus wenigstens einem ersten Material, der von einer Hülle (1, 4, 5, 6, 7)aus wenigstens einem zweiten Material umgeben ist, wobei der Kern (3) spezifisch leichter ist als die Hülle (1, 4, 5, 6, 7),
**dadurch gekennzeichnet,**
- daß die Hülle (1, 4, 5, 6, 7) aus Acrylglas ist und
- daß der Kern (3) unter den Depolymerisationsbedingungen von Acrylglas chemisch inert ist.

2. Verbundkörper nach Anspruch 1,
**dadurch gekennzeichnet,**
daß der Kern (3) einen anorganischen Schaum aufweist.

3. Verbundkörper nach Anspruch 2,
**dadurch gekennzeichnet**,
daß der anorganische Schaum geschlossenzellig ist.

4. Verbundkörper nach Anspruch 2 oder 3,
**dadurch gekennzeichnet,**
daß der Schaum Glasschaum ist.

5. Verbundkörper nach einem der vorhergehenden Ansprüche,
**dadurch gekennzeichnet,**
daß die Dichte des Kerns (3) zwischen 50 und 500 kg/m³, bevorzugt zwischen 100 und 200 kg/m3 ist.

6. Verbundkörper nach einem der vorhergehenden Ansprüche,
**dadurch gekennzeichnet,**
daß die Druckfestigkeit des Kerns (3) mindestens 0,9 N/mm² beträgt.

7. Verbundkörper nach einem der Ansprüche 2 bis 6,
**dadurch gekennzeichnet,**
daß der Schaum Poren von 0,2 - 1,5 mm, vorzugsweise 0,5 - 0,8 mm, aufweist.

8. Verbundkörper nach einem der vorhergehenden Ansprüche,
**dadurch gekennzeichnet,**
daß die Hülle (6, 7) um den Kern (3) gegossen ist.

9. Verbundkörper nach einem der Ansprüche 1 bis 7,
**dadurch gekennzeichnet,**
daß die vorgeformte Hülle (1, 4, 5) auf den Kern (3) mit einem Kleber (2) kaschiert ist.

10. Verbundkörper, mit einem plattenförmigen Kern (3) aus geschlossenzelligem anorganischem Glasschaum, der auf beiden Plattenseiten mit einer extrudierten oder gegossenen Acrylatschicht versehen ist und dessen Kanten mit Acrylglas kaschiert sind.
